# EUROPEAN PATENT SPECIFICATION

(11) **EP 0 614 445 B1**
(45) Date of publication and mention of the grant of the patent: **19.08.1998**
(21) Application number: 92923896.2
(22) Date of filing: 23.11.1992
(51) Int. Cl.: C01B 33/20

(54) **SYNTHESIS OF SMECTITE CLAY MINERALS**
SYNTHESE VON SMEKTIT-TONMINERALEN
SYNTHESE DE MINERAUX D'ARGILE A SMECTITE

(30) Priority: 30.11.1991 GB 9125560; 09.06.1992 GB 9212167
(43) Date of publication of application: 14.09.1994
(73) Proprietor: Laporte Industries Limited, London WC1B 3RA (GB)
(72) Inventor: BUCK, Malcolm, Johnstone, Widnes Cheshire WA8 0DX (GB); CROFTS, Rhona, Dorothy, Edinburgh EH9 1PE (GB); PURCHASE, Linda, June, Widnes Cheshire WA8 0EN (GB)
(74) Representative: ffrench-Lynch, Cecil
(86) International application number: GB9202161
(87) International publication number: WO9311069

(56) References cited:
- FR-A- 1 565 348
- PATENT ABSTRACTS OF JAPAN vol. 14, no. 211 (C-0715)2 May 1990

## Description

This invention relates to the synthesis of hectorite and more particularly to a method of controlling the synthesis to achieve particular product and processing characteristics.

Hectorite is a clay mineral which occurs naturally at several locations in the United States notably at Hector, California. Hectorite is a layered swelling trioctahedral magnesium silicate mineral which has a smectite type structure and having the general formula

[Mg₆₋ₓLiₓSi₈O₂₀OH_{4-y}F_{y}]^{x-}

in which x may have a value of from 0 to 1.2, y may have a value of from 0 to less than 4 and the overall negative lattice charge is balanced by cations. The composition and the rheological and other physical properties of this naturally occuring mineral may be somewhat variable and to avoid this, and to produce a material having relatively improved rheological properties, processes for the synthesis of hectorite-type materials have been developed. Other smectites such as saponite and montmorillonite have also been synthesised. The structures of smectites and of the individual smectite-type minerals identified above may be readily identified by X-ray diffraction techniques.

Very many of the hectorite syntheses have in common the precipitation of silica under basic conditions. Neumann, for example, in United States Patents No. 3586478 and 3671190 teaches the co-precipitation of magnesium and silicon values corresponding to the hectorite composition from a solution of a water soluble magnesium salt such as magnesium sulphate or magnesium chloride, sodium silicate, a base such as sodium carbonate or hydroxide and, if appropriate, lithium and fluorine compounds and the treatment of the precipitate under hydrothermal and preferably elevated pressure conditions to achieve crystallisation with the formation of a hectorite structure. Neumann later disclosed in United States Patent No 4049780 a variation in the process comprising precipitating silicon values onto a preformed suspension of a water-insoluble magnesium compound. Further development of hectorite syntheses involved variation of the materials used. The use of partially or wholly degraded natural materials as a source of a proportion of the magnesium and/or silicon values was disclosed in, for example, United States patent No. 3954943. United States Patent No. 4054537 disclosed the inclusion of silica in sol form and Japanese Patent Publication No. 61-12848 disclosed its inclusion in the form of silicic acid. German Patent No. 3934473 disclosed the use of sodium bicarbonate as the base used to achieve precipitation. The use of pressure in the precipitation and crystallisation stages was disclosed in European Patent No. 88372. The patent disclosures listed above represent a limited selection of the art relating to hectorite synthesis and are quoted for illustrative purposes only.

Despite the considerable amount of research which has been conducted on hectorite syntheses, resulting in sometimes excellent laboratory scale preparations, the process has remaimed somewhat unpredictable on pilot or plant scale production in that some properties of the product may vary, apparently inexplicably from batch to batch. The present invention relates to a method for the control of the hectorite synthesis process with a view to reducing the variability of product and to improving certain properties thereof in aqueous dispersion.

The invention is based on the new information that there is a relationship between the process pH and at least some properties which affect the utility of the product.

US Patent 3671190 discloses the production of synthetic hectorite by precipitation at a pH of at least 8. Preferably the pH does not exceed 12.5, is desirably 8.5 to 9.5 and advantageously 9. By the suitable selection of process pH in a manner not disclosed in this US Patent the present invention gives a new ability to control the character of the product and its consistency from batch to batch.

The effect of the suitable control of pH in the manufacture of a single batch or of successive batches of synthetic hectorite is reflected in one or more of the product features of increased dispersibility, optical clarity when dispersed in aqueous media, in time to gel and gel strength in such media, and in the washing ability of the product. While the first four properties are important to users of the product the last property is of great importance to the economics of the production process as is the ability to improve product consistency from batch to batch. The references herein to an aqueous media include reference to mixed aqueous/organic media unless the context otherwise requires. It is also envisaged that the product of the invention will give improvements in derivatised hectorites such as ion-exchanged hectorites which may suitably be organo-onium exchanged hectorites destined for dispersion in organic media. The present invention is described herein with particular reference to batch processes which are usually practised in the area of clay synthesis, possible due to the relatively lengthy pressure stage involved. However the principles of the invention are equally applicable to continuous processing.

United States Patent No. 3887454, which relates to the preparation of certain clay-like minerals which are structurally different to hectorite in that they are dioctahedral instead of trioctahedral, discloses the preparation of an aqueous slurry of a mixture of hydrous silica, hydrous alumina, hydrous magnesia and fluoride, the ageing of the slurry and, after ageing and before hydrothermal treatment at elevated temperature and autogenous pressure, the adjustment of the pH to from 7.0 to 10.5. The process is exemplified on a laboratory scale using pH values of 10.3 or 9.9. The product is intended for use as a catalyst and its rheological properties are not considered. Japanese Patent Publication No.61-275126 describes a process for the synthesis of a modified hectorite in which 0.5% to 15% molar of the silicate fraction is substituted by alumina by direct treatment of an activated aluminosilicate solid product, a magnesia component and a compound or compounds comprising alkali metal and fluorine ions in stoichiometric proportions in an autoclave. The pH of the treatment mixture is advisably 8 to 11 especially 8.5 to 10. The process is exemplified on a laboratory scale only.

The present invention provides a process for the synthesis of hectorite comprising the formation of a solid reaction product containing the magnesium and silicon values of the hectorite by the precipitation of at least a proportion of the said values under basic conditions to form a precursor and the subsequent treatment of the said precursor under hydrothermal conditions to achieve crystallisation of a product having the hectorite structure, the process being characterised in that the pH under which the precipitation is conducted, or the pH of the precursor before hydrothermal treatment, is controlled at from 7.5 +/- 0.25 to 10 but excluding 9.0 to 9.75. Preferably the reaction mixture containing the solid reaction product is initially hydrothermally treated at a temperature of from 60°C to below 160°C, for example, very conveniently, at reflux temperature under atmospheric pressure for, for example, 0.5 to 4 hours before hydrothermal pressure treatment. The hydrothermal pressure treatment may be conducted under the usual conditions for this technique, for example under autogenous pressure developed at a temperature of from 160°C to 300°C for, for example, from 2 hours to 6 hours. The product having the hectorite structure is subsequently separated and washed.

There is inherent scope for an appreciable variation in pH from batch to batch in normal plant operation of the hectorite synthesis process. By way of example magnesium sulphate heptahydrate, a commonly used reactant in hectorite synthesis, may give aqueous solutions varying in pH by over 1. Samples of this chemical, taken from 18 different batches obtained commercially, gave pH values ranging from 7.49 to 6.24. Samples of sodium silicate, while ostensibly the same product, may vary slightly in Na₂O:SiO₂ ratio and can give solutions having pH values ranging from, for example, 10.55 to 12.19 or from 11.59 to 11.98. The quantity and concentration of base added to achieve precipitation is subject to slight variation of quantity and concentration in normal plant operation. These effects and others, which will readily be apparent to those experienced in clay synthesis, can either cancel or aggravate each other in a random manner and, if the latter is the case, pH variations may be quite sufficient to cause departure from the area within which good product gel times are obtained.

According to one preferred aspect of the present invention the pH is controlled at from 7.5 +/- 0.25 to 8.75.

The effect of this control of pH on the time to gel, and on other product and processing characteristics, is quite dramatic. It has been found, for example, that, at a precipitation pH of about 7.0 or slightly above the product will not gel and that, at a precipitation pH of above about 9 a product is obtained which dies not disperse completely and gives very poor gel times. At a precipitation pH of about 9.7 to about 10 a product of relatively poor, although not bad, gelling properties may be produced. This is not a preferred feature because it is difficult to control plant scale processes within such a narrow pH range and because of the sub-optimal effect of the invention within this pH area.

The control of process pH required by the present invention may be achieved by alternative means. The pH characteristics of the individual reactants may be monitored and the hectorite synthesis reactant mixture may be initially formed, with any required additional acid or base, to give the correct pH. Preferably, the reaction mixture is made up in the usual manner, and the pH of the reaction mixture is maintained and corrected at this stage before any elevated temperature treatment of the reaction mixture. It is also possible to delay the pH control until after an initial normal pressure hydrothermal treatment, e.g. by reflux, but beore the reactant mixture, now containing precipitated and possibly partly crystallised product, is subjected to pressure hydrothermal treatment.

The pH is adjusted using a suitable reagent which will not interfere with the process, either a suitable acid such as H₂SO₄ or HF or HNO₃ or a suitable base such as NaOH or NH₄OH or other suitable acidic or alkaline material. While any concentratioin of acid may be used it is preferred not to add an acid of concentration above 80% w/w directly to the reaction mixture since this may affect the product in contact with the added acid before it is diluted by the body of the reaction mixture. It is also preferred not to add unduly dilute acid, e.g. below about 5% w/w to the reaction mixture since this would cause undue dilution of the entire reaction mixture possibly resulting in an alteration of the dynamics of the hectorite formation process. Preferably the acid is added at a concentration of from 5% to 50% w/w to the reaction mixture. The same considerations and numerical limitations apply to the addition of base.

The invention will now be illustrated by reference to the following examples of specific embodiments thereof.

In the Examples Figure I is a graph showing the variation of the gel time with the pH of a hectorite synthesis batch and Figure II is a graph showing the wash time of successive batches without (21 batches) and with (12 batches) pH control according to the invention.

### Example 1

A number of samples of synthetic hectorite were produced under closely controlled different pH conditions.

The synthesis process was a standard one in which a solution of magnesium and lithium salts were precipitated by the addition of base and a sodium silicate solution was added to the suspension thus obtained to precipitate silicon values. After ageing the mixed precipitate under reflux to allow the reaction to go to completion it was subjected to treatment in an autoclave under a superatmospheric pressure and autogenous pressure until crystallisation had occurred, the product was filtered, washed free of salts with demineralised water to a given conductivity, dried and ground. The present invention is particularly applicable to synthetic hectorite produced by such a successive precipitation process, a magnesium compound being first precipitated and silicon values being precipitated onto it, for example the process described in US Patent No. 4049780 although it is not limited to this process.

The pH of the reaction mixture was controlled by the addition of sulphuric acid or sodium hydroxide and was determined by sampling the reaction mixture immediately after the addition of the sodium silicate i.e. before the initial hydrothermal treatment stage.

The time to gel of a 5% dispersion in water of the samples was determined under standard conditions and plotted against pH.

The product of two hectorite syntheses were made the subjects of two series of Examples (Series A and Series B) and the results as to the gel time of the product obtained from synthesis at different pH values are summarised in the graph attached hereto as Figure I.

It is seen from Figure I that the results of Series A and B exactly confirm each other up to pH 9.0 that, at a point which may vary between about 9.0 and about 9.24, the gelling performance of the product deteriorates suddenly and drastically and that at a pH of about 9.75 the product improves but at higher pH values again deteriorates.

Without control of pH to avoid the area between about 9.3 and about 9.75 or, preferably, between about 9.0 and 9.75 there is a likelihood of the production of batches of product having bad gelling characteristics.

### Example II

Using the process described in the preceding example although on a larger scale a number of successive batches of hectorite were synthesised using a standard process. In the first 21 batches the process was operated without any attempt to control random variations in the pH. In the remaining batches acid (H₂SO₄) was added to the formed reaction mixture before it was heated under reflux, to bring the pH to within the range 9.27 to 8.39.

The time to wash the product to a standard conductivity was noted and the speed of aqueous dispersion, the optical clarity of the dispersion, the time to gel and the gel strength of the product of each batch were measured all under standard conditions.

In Figure II the individual and average wash times are shown (in hours). It is seen that the variability in wash times greatly improved.

Typical average results obtained for non-pH controlled batches and batches produced according to the invention are as follows:

| | Non-controlled | Invention |
|---|---|---|
| Wash time (hours) | 9.6 | 6.3 |
| Time to gel (mins) | 6.1 | 3.2 |
| Gel strength | 31.5 | 41.0 |
| Time to Disperse | 20.8 | 18.1 |
| Clarity of dispersal | 12.0 | 9.4 |

The invention further relates to a process for the synthesis of hectorite comprising the formation of a solid reaction product containing the magnesium and silicon values of the hectorite by the precipitation of at least a proportion of the said values under basic conditions to form a precursor and the subsequent treatment of the said precursor under hydrothermal conditions to achieve crystallisation of a product having the hectorite structure, characterized in that the pH under which precipitation is conducted, or the pH of the precursor before pressure hydrothermal treatment, is controlled at from 8.39 to 9.27 to achieve a reduction in the time required to wash the crystallized hectorite to a standard conductivity.

The pH adjusted reaction mixture may be subjected to an atmospheric pressure hydrothermal treatment at at least 600C and for at least 0.5 hours, and is subjected thereafter to a hydrothermal pressure treatment.

This underlines the widespread nature of the improvements obtainable by the use of the present invention.

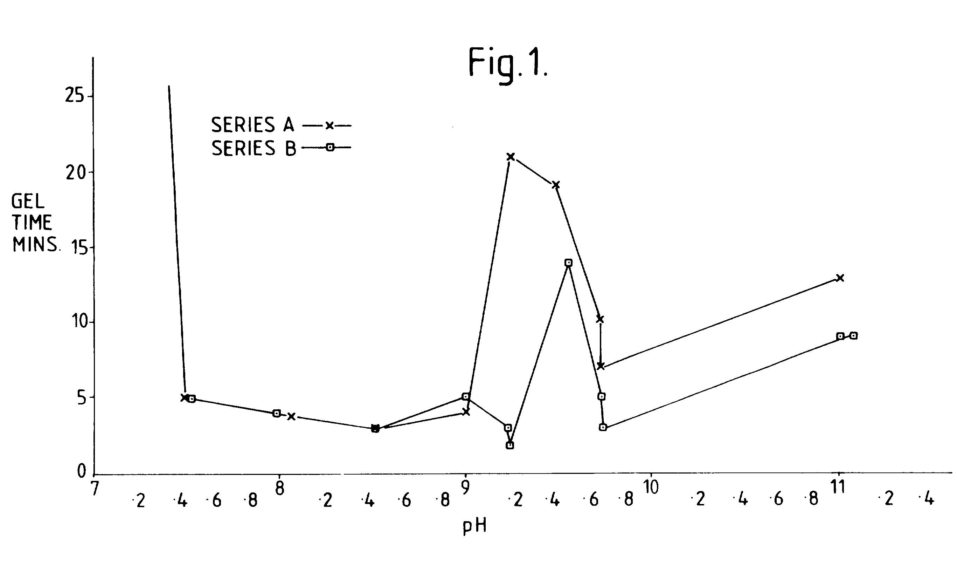

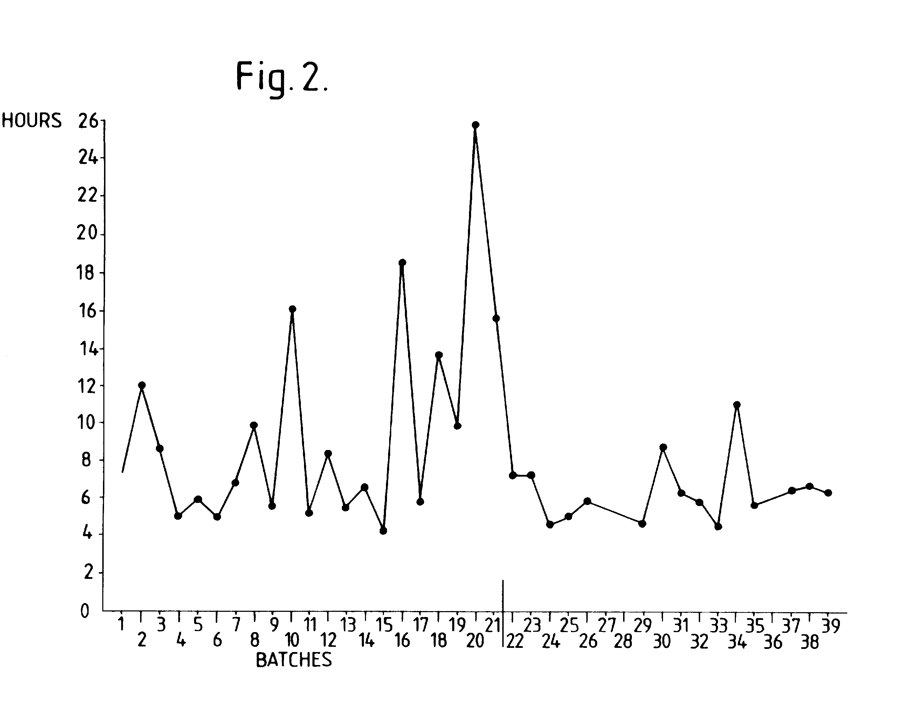

## Claims

1. A process for the synthesis of hectorite comprising the formation of a solid reaction product containing the magnesium and silicon values of the hectorite by the precipitation of at least a proportion of the said values under basic conditions to form a precursor and the subsequent treatment of the said precursor under hydrothermal conditions to achieve crystallisation of a product having the hectorite structure, characterized in that the pH under which precipitation is conducted, or the pH of the precursor before pressure hydrothermal treatment, is controlled at from 7.5 + 0.25 to 10, but excluding 9.0 to 9.75.

2. A process as claimed in Claim 1, characterized in that the pH is controlled at from 7.5 ± 0.25 to 8.75.

3. A process as claimed in Claim 1 or Claim 2, characterized in that said process is a multibatch process.

4. A process for the synthesis of hectorite comprising the formation of a solid reaction product containing the magnesium and silicon values of the hectorite by the precipitation of at least a proportion of the said values under basic conditions to form a precursor and the subsequent treatment of the said precursor under hydrothermal conditions to achieve crystallisation of a product having the hectorite structure, characterized in that the pH under which precipitation is conducted, or the pH of the precursor before pressure hydrothermal treatment, is controlled at from 8.39 to 9.27 to achieve a reduction in the time required to wash the crystallized hectorite to a standard conductivity.

5. A process as claimed in any preceding Claim, wherein the process pH is controlled by the addition of a suitable reagent to the reaction mixture before hydrothermal treatment thereof.

6. A process as claimed in Claim 4, wherein the pH adjusted reaction mixture is subjected to an atmospheric pressure hydrothermal treatment at at least 60°C and for at least 0.5 hours, and is subjected thereafter to a hydrothermal pressure treatment.

7. A process as claimed in any preceding Claim, wherein the pH is adjusted by the addition of sulphuric acid or nitric acid.

8. A process as claimed in any preceding Claim, wherein the pH is adjusted by the addition of a reagent having a concentration of from 5% w/w to 50% w/w.

## Patentansprüche

1. Verfahren zur Herstellung von Hectorit, umfassend die Bildung eines festen Reaktionsprodukts, das die Magnesium- und Siliziumanteile des Hectorits enthält, durch Ausfällung von mindestens einem Teil der Anteile unter basischen Bedingungen, um eine Vorstufe zu bilden, und die nachfolgende Behandlung der Vorstufe unter hydrothermalen Bedingungen, um eine Kristallisation eines Produkts mit der Hectoritstruktur zu erreichen, dadurch ***gekennzeichnet***, daß der pH-Wert, unter dem die Ausfällung durchgeführt wird, oder der pH-Wert der Vorstufe vor der hydrothermalen Druckbehandlung auf 7,5 ± 0,25 bis 10 aber unter Ausschluß von 9,0 bis 9,75 eingestellt wird.

2. Verfahren nach Anspruch 1, dadurch ***gekennzeichnet***, daß der pH-wert auf 1,5 ± 0,25 bis 8,75 eingestellt wird.

3. Verfahren nach Anspruch 1 oder 2, dadurch ***gekennzeichnet***, daß das Verfahren ein Verfahren mit mehreren Chargen ist.

4. Verfahren zur Herstellung von Hectorit, umfassend die Bildung eines festen Reaktionsprodukts, das die Magnesium- und Siliziumanteile des Hectorits enthält, durch Ausfällung von mindestens einem Teil der Anteile unter basischen Bedingungen, um eine Vorstufe zu bilden, und die nachfolgende Behandlung der Vorstufe unter hydrothermalen Bedingungen, um eine Kristallisation eines Produkts mit der Hectoritstruktur zu erreichen, dadurch ***gekennzeichnet***, daß der pH-Wert, unter dem die Ausfallung durchgeführt wird, oder der pH-Wert der Vorstufe vor der hydrothermalen Druckbehandlung auf 8,39 bis 9,27 eingestellt wird, um eine Verringerung der Dauer zu erreichen, die zum Waschen des kristallisierten Hectorits bis zu einer spezifischen, elektrischen Standardleitfähigkeit erforderlich ist.

5. Verfahren nach einem der vorstehenden Ansprüche, worin der Verfahrens-pH-Wert durch die Zugabe eines geeigneten Reagenzes zu dem Reaktionsgemisch vor dessen hydrothermaler Behandlung gesteuert wird.

6. Verfahren nach Anspruch 4, worin das Reaktionsgemisch, dessen pH-Wert eingestellt wurde, mindestens 0,5 Stunden lang einer hydrothermalen Behandlung bei Atmosphärendruck und mindestens 60 °C und danach einer hydrothermalen Druckbehandlung unterzogen wird.

7. Verfahren nach einem der vorstehenden Ansprüche, worin der pH-Wert durch die Zugabe von Schwefelsäure oder Salpetersäure eingestellt wird.

8. Verfahren nach einem der vorstehenden Ansprüche, worin der pH-Wert durch Zugabe eines Reagenzes mit einer Konzentration von 5 % W/W bis 50 % W/W eingestellt wird.

## Revendications

1. Procédé pour la synthèse de l'hectorite comprenant la formation d'un produit de réaction solide contenant des éléments intéressants de l'hectorite, le magnésium et le silicium, par précipitation d'au moins une certaine proportion de ces éléments en milieu basique pour former un précurseur, puis le traitement de ce précurseur dans des conditions hydrothermiques pour obtenir la cristallisation d'un produit ayant la structure de l'hectorite, caractérisé en ce que le pH auquel la précipitation est effectuée, ou le pH du précurseur avant le traitement hydrothermique sous pression, est réglé à une valeur de 0,25 à 10, mais à l'exclusion de l'intervalle de 9,0 à 9,75.

2. Procédé selon la revendication 1, caractérisé en ce que le pH est réglé à une valeur de 7,5 ± 0,25 à 8,75.

3. Procédé selon la revendication 1 ou la revendication 2, caractérisé en ce que ce procédé est un procédé discontinu.

4. Procédé pour la synthèse de l'hectorite comprenant la formation d'un produit de réaction solide contenant les éléments intéressants de l'hectorite, (magnésium et silicium) par précipitation d'au moins une fraction de ces éléments intéressants en milieu basique pour former un précurseur, et le traitement ultérieur de ce précurseur dans des conditions hydrothermales pour réaliser la cristallisation d'un produit ayant la structure de l'hectorite, caractérisé en ce que le pH auquel la précipitation est effectuée, ou le pH du précurseur avant le traitement hydrothermal sous pression, est réglé à une valeur de 8,39 à 9,29 pour obtenir une réduction dans le temps nécessaire pour laver l'hectorite cristallisée jusqu'à une conductibilité déterminée.

5. Procédé selon l'une quelconque des revendications précédentes, dans lequel le pH du procédé est réglé par addition d'un réactif approprié au mélange réactionnel avant le traitement hydrothermal de celui-ci.

6. Procédé selon la revendication 4, dans lequel le mélange réactionnel dont le pH a été ajusté est soumis à un traitement hydrothermal sous la pression atmosphérique à 60°C au moins et pendant 0,5 heure au moins et est ensuite soumis à un traitement sous une pression hydrothermale.

7. Procédé selon l'une quelconque des revendications précédentes, dans lequel le pH est ajusté par addition d'acide sulfurique ou nitrique.

8. Procédé selon l'une quelconque des revendications précédentes, dans lequel le pH est ajusté par addition d'un réactif ayant une concentration de 5 % p/p à 50 % p/p.
